# EUROPÄISCHE PATENTSCHRIFT

(11) **EP 1 431 726 B1**
(45) Veröffentlichungstag und Bekanntmachung des Hinweises auf die Patenterteilung: **12.01.2011**
(21) Anmeldenummer: 03025877.6
(22) Anmeldetag: 12.11.2003
(51) Int. Cl.: G01G 19/10

(54) **Verfahren zur Bestimmung des Lastgewichts auf dem Lasttragmittel einer hydraulischen Hubvorrichtung**
Method for determining load weight on a load carrying means of a hydraulic lifting device
Procédé determinant le poids de la charge sur un élément porte-charge d'un engin de levage hydraulique

(30) Priorität: 19.12.2002 DE 10259470
(43) Veröffentlichungstag der Anmeldung: 23.06.2004
(73) Patentinhaber: Jungheinrich Aktiengesellschaft, 22047 Hamburg (DE)
(72) Erfinder: Allerding, Uwe, 21409 Embsen (DE); Lehnart, Sebastian, 20253 Hamburg (DE)
(74) Vertreter: Hauck Patent- und Rechtsanwälte

(56) Entgegenhaltungen:
- EP-A- 0 246 363
- DE-A- 3 820 757
- DE-A- 4 328 143
- DE-A- 10 146 421

## Beschreibung

Die Erfindung bezieht sich auf ein Verfahren zur Bestimmung des Lastgewichts auf dem Lasttragmittel einer hydraulischen Hubvorrichtung, bei einem Gabelstapler mit Freihub und Masthub, nach dem Oberbegriff des Patentanspruchs 1.

Zur Ermittlung von Betriebsparametern und Gefahrenzuständen und zur Lastermittlung für den Fahrer ist bekannt, bei Flurförderzeugen die auf dem Lasttragmittel befindliche Last zu sensieren. Eine einfache Möglichkeit besteht darin, den Druck des Hydraulikmediums im Hubzylinder zu messen. Hierfür gibt es eine Reihe unterschiedlicher apparativer Vorkehrungen, wie Wägezellen, Dehnungsmeßstreifen usw. Die bekannten Mittel sind jedoch nicht in der Lage, die temperatur- und altersabhängigen Einflüsse der sich ändernden Viskosität des Hydraulikmediums und der sich ändernden Reibung in der Hubmechanik und dem Hubzylinder zu kompensieren. Sie liefern daher zumeist nur ungenaue Meßwerte.

Aus DE 101 46 421 A1 ist ein Verfahren zur Kompensation der Viskosität für ein Nutzlastmeßsystem bekannt geworden. Bei dem bekannten Verfahren wird eine Vielzahl von Meßwerten mit einem ersten Nutzlastgewicht und einem zweiten Nutzlastgewicht bestimmt. Die Temperatur bei der Ermittlung dieser Meßwerte wird ebenfalls gemessen. Beim Anheben einer dritten Nutzlast wird ebenfalls eine Vielzahl von Druckmeßwerten ermittelt bei gleichzeitiger Bestimmung der Temperatur. Unter Berücksichtigung der Temperatur wird das Gewicht der dritten Nutzlast aus den Werten der ersten und zweiten Meßreihe ermittelt. Mit anderen Worten, aus einer temperaturabhängigen Bezugskurve, die für die erste und zweite Nutzlast ermittelt wurde, wird nun unter Messung der Temperatur das jeweilige Nutzlastgewicht bestimmt. Dieses Verfahren ist naturgemäß genauer als das oben erwähnte, berücksichtigt jedoch nicht die Reibungskomponenten. Beim Senken wirkt die Reibung dem Absenken der Last entgegen und beim Heben ebenfalls, führt jedoch zu einer Verringerung des Drucks im Hubzylinder.

DE 4 328 143 A1 offenbart ein Verfahren nach dem Oberbegriff des Anspruchs 1.

Der Erfindung liegt die Aufgabe zugrunde, ein Verfahren zur Bestimmung des Lastgewichts auf dem Lasttragmittel einer hydraulischen Hubvorrichtung anzugeben, mit dem auf einfache Weise genaue Werte für das Lastgewicht ermittelt werden können.

Diese Aufgabe wird durch die Merkmale des Patentanspruchs 1 gelöst.

Durch Mehrfachmessung mit einem ersten und einem zweiten Lastgewicht bekannter Größe wird eine Bezugskurve ermittelt für die Abhängigkeit des Lastgewichts vom Druck. Da die Abhängigkeitsverhältnisse im wesentlichen linear sind, ist die Bezugskurve eine Gerade, die z.B. als Regressionsgerade aus den ermittelten Meßwerten berechnet wird. Die Bezugskurve wird daraufhin in einem Speicher eines ohnehin vorhandenen Prozeßrechners abgespeichert.

Erfindungsgemäß wird während eines kurzzeitigen Hebens und Senkens nacheinander jeweils eine Vielzahl von Druckmeßwerten gemessen. Aus den Meßwerten für das Heben einerseits und für das Senken andererseits wird jeweils ein Mittelwert gebildet. Aus den beiden Mittelwerten wird ein dritter Mittelwert gebildet, der zur Bestimmung des Lastgewichts auf die Bezugskurve angewendet wird.

Während des Hebens und des Senkens, das über einen relativ kurzen Zeitraum von einigen Sekunden erfolgen kann, wird eine Vielzahl von Druckmeßwerten aufgenommen. Da beim Beginn des Heben- und Absenkenvorgangs Einschwingungsvorgänge ablaufen, ist es nach einer Ausgestaltung der Erfindung zweckmäßig, diese zu unterdrücken und die Meßwerte erst nach dem Abklingen der Einschwingvorgänge aufzunehmen. Dauert z.B. der Absenk- bzw. Hebenvorgang vier Sekunden, wird erst in der letzten Sekunde die beschriebene Mehrfachmessung vorgenommen.

Es versteht sich, daß die Reihenfolge der Vorgänge "Heben" und "Senken" bei der Lastsensierung beliebig sein kann.

Bei manchen Hubvorrichtungen kommen verschiedene Hubzylinder zeitlich nacheinander oder auch zusammen zum Einsatz, z.B. bei Gabelstaplern mit Freihub und Masthub. In einem solchen Fall ist es nach einer Ausgestaltung der Erfindung zweckmäßig, daß bei unterschiedlichen Grundlasten für jede einzelne eine Bezugskurve bzw. eine Regressionsgerade ermittelt und gespeichert wird.

Das erfindungsgemäße Verfahren wird anhand einer Zeichnung erläutert.

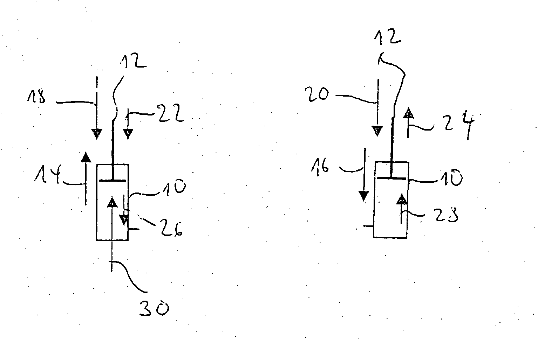

Die einzige Figur zeigt schematisch einen Hubzylinder im Heben- und im Senkenbetrieb.

Ein Hubzylinder 10 betätigt über die Kolbenstange 12 ein nicht gezeigtes Lasttragmittel, z.B. von einem nicht gezeigten Flurförderzeug. Die linke Darstellung stellt den Hebenbetrieb und die rechte den Senkenbetrieb dar. Dies wird durch einen Bewegungspfeil 14 bzw. 16 angedeutet. Die Pfeile 18 und 20 deuten die Gewichtskraft von einer auf dem Lasttragmittel ruhenden Last an. Mit dem Pfeil 22 bzw. 24 ist die jeweils auftretende Reibung beim Heben und Senken angedeutet. Sie wirkt jeweils der Bewegungsrichtung des Kolbens entgegen. Die Reibung der Hydraulikflüssigkeit ist mit dem Pfeil 26 bzw. 28 angedeutet. Der Pfeil 30 gibt die Hubkraft wieder.

Aus der Darstellung ist zu entnehmen, daß die Kompensation der Viskositäts- und Reibungseinflüsse durch die Gegenläufigkeit der Bewegungen während des Meßzyklus kompensiert werden. Die mechanische Reibung, die beim Heben der Bewegung entgegenhält, führt zu einer Druckerhöhung während des Hubvorgangs (linke Darstellung). Beim Senken hingegen wirkt die Reibung dem Absenken der Last entgegen und bewirkt eine Druckminderung im Hubzylinder. Analog verhält es sich mit der Viskosität. Beim Heben muß das dickflüssige Öl durch die Leitungen gepreßt werden und der Druck im Hubzylinder fällt niedriger aus als bei dünnflüssigem Öl. Beim Senken fließt das dickflüssige Öl hingegen nicht schnell genug ab und es kommt zu einer Druckerhöhung.

In der Steuerung des Heben- und Senkenbetriebes kann ein Schaltungsteil oder eine Software vorgesehen sein, welche das beschriebene Verfahren automatisch durchführt, sobald der Betrieb einsetzt, z.B. für jeden neuen Lastfall. In der Kabine des Fahrers kann auch ein Schaltknopf angeordnet sein, bei dessen Betätigung die beschriebene Lastsensierung - automatisch - durchgeführt wird.

## Patentansprüche

1. Verfahren zur Bestimmung des Lastgewichts auf dem Lasttragmittel einer hydraulischen Hubvorrichtung bei einem Gabelstapler mit Freihub und Masthub, bei dem der Druck des hydraulischen Mediums in einem Masthub- und einem Freihubzylinder gemessen und durch Mehrfachmessung mit Lastgewichten bekannter Größe eine Bezugskurve für die Abhängigkeit des Lastgewichts vom Druck ermittelt wird, wobei vor und während des Heben- und Senkenbetriebs das Lasttragmittel auf Anforderung des Fahrers oder durch Automatismus zur Lastsensierung über einen kurzen Zeitraum angehoben und abgesenkt, und während des kurzzeitigen Hebens und Senkens jeweils eine Vielzahl von Druckmesswerten ermittelt wird, **dadurch gekennzeichnet, dass** sowohl für einen Freihub als auch einen Masthub der hydraulischen Hubvorrichtung Bezugskurven ermittelt und gespeichert werden, aus den Druckmesswerten für das kurzzeitige Heben und Senken Mittelwerte gebildet werden und aus den beiden Mittelwerten für Heben und Senken ein dritter Mittelwert gebildet und das Lastgewicht durch die Anwendung des dritten Mittelwertes auf die betreffende Bezugskurve bestimmt wird.

2. Verfahren nach Anspruch 1, **dadurch gekennzeichnet, daß** die Mehrfachmessung eine vorgegebene Zeit nach dem Beginn des kurzzeitigen Heben- und Senkenvorgangs vorgenommen wird.

3. Verfahren nach Anspruch 1 oder 2, **dadurch gekennzeichnet, daß** bei unterschiedlichen Grundlasten für jede Grundlast eine Bezugskurve ermittelt und gespeichert wird.

## Claims

1. A method for determining the weight of a load upon a load support means of a hydraulic lifting device, in a forklift truck with free lift and mast lift, in which method the pressure of hydraulic fluid within a mast lifting cylinder and a free lifting cylinder is measured and a reference curve representing the relationship between the weight of the load and the pressure is determined by multiple measurements with loads of known weight, wherein, before and during load lifting and lowering operations, said load support means is lifted and lowered during a short period upon request of an operator or by automatic means to sense the load, and a plurality of pressure measuring values is obtained while said load support means is being lifted and lowered during said short period, **characterized in that** both, for a free lift and a mast lift of the hydraulic lifting device, reference curves are determined and stored, average values are generated from said pressure measuring values for the short-period lifting and lowering and a third average value is generated from said two average values for lifting and lowering and the weight of the load is determined by applying said third average value to said reference curve.

2. A method as defined in claim 1, **characterized in that** said multiple measurements are performed a predetermined period after initiating said lifting and lowering during said short period.

3. A method as defined in claim 1 or 2, **characterized in that** when there are varying basic loads a refernce curve is determined and stored for each basic load.

## Revendications

1. Procédé déterminant le poids de la charge sur un élément porte-charge d'un engin de levage hydraulique dans un chariot élévateur à fourche avec levage libre et levage de mât, dans lequel la pression du moyen hydraulique est mesurée dans un cylindre de levage de mât et dans un cylindre de levage libre, et une courbe de référence pour la dépendance du poids de la charge de la pression est déterminée par mesures multiples avec des poids de la charge de grandeur connue, dans lequel avant et pendant l'opération de levage et d'abaissement, le moyen de prise de charge est levé ou abaissé pour un court temps à la demande du conducteur ou par un automatisme pour détecter la charge, et une pluralité de valeurs mesurées de pression est déterminée pendant le levage et l'abaissement temporaire, **caractérisé en ce que** des courbes de référence sont déterminées et stockées non seulement pour un levage libre mais encore pour un levage de mât de l'engin de levage hydraulique, des valeurs moyennes sont formées à partir des valeurs mesurées de pression pour le levage et l'abaissement temporaire, et une troisième valeur moyenne est formée à partir des deux valeurs moyennes pour levage et abaissement, et le poids de la charge est déterminé en appliquant la troisième valeur moyenne à la courbe de référence respective.

2. Procédé selon la revendication 1, **caractérisé en ce que** la mesure multiple est faite après un temps prédéterminé après le commencement de l'opération temporaire de levage et d'abaissement.

3. Procédé selon la revendication 1 ou 2, **caractérisé en ce que** dans des charges de base différentes, une courbe de référence est déterminée et stockée pour chaque charge de base.
